# FASCICULE DE BREVET EUROPEEN

(11) **EP 4 487 420 B1**
(45) Date de publication et mention de la délivrance du brevet: **02.09.2026**
(21) Numéro de dépôt: 23706379.7
(22) Date de dépôt: 27.02.2023
(51) Int. Cl.: H01R 13/44, H01R 13/62, B60L 53/16, H01R 24/38, H01R 13/631

(54) **DISPOSITIF DE CONNEXION ELECTRIQUE A FICHE ELECTRIQUE DEPLOYABLE**
ELEKTRISCHE VERBINDUNGSVORRICHTUNG MIT AUSFAHRBAREM ELEKTRISCHEN STECKER
ELECTRICAL CONNECTION DEVICE WITH DEPLOYABLE ELECTRICAL PLUG

(30) Priorité: 03.03.2022 FR 2201860
(43) Date de publication de la demande: 08.01.2025
(73) Titulaire: SANSO INVESTMENT SOLUTIONS, 75008 Paris (FR)
(72) Inventeur: LEFAUCHEUX, Antoine, 38000 GRENOBLE (FR); TROUFFLARD, Ronan, 38000 GRENOBLE (FR)
(74) Mandataire: INNOV-GROUP
(86) Numéro de dépôt international: PCT/EP2023/054839
(87) Numéro de publication internationale: WO 2023/165928

(56) Documents cités:
- EP-A1- 3 680 992
- EP-B1- 2 560 245
- EP-B1- 3 317 926
- FR-A1- 2 973 592
- US-A1- 2014 176 071

## Description

### Domaine technique de l'invention

La présente invention se rapporte à un dispositif de connexion électrique à fiche électrique déployable.

### Etat de la technique

Diverses solutions ont déjà été proposées pour la recharge d'un véhicule électrique. Par véhicule électrique, on entend bien entendu un véhicule 100% électrique ou de type hybride rechargeable (par exemple électrique et thermique ou électrique et hydrogène). Certains systèmes employés pour la recharge du véhicule utilisent un effet magnétique pour attirer une fiche électrique associée au véhicule électrique vers une prise électrique reliée au réseau, et réaliser ainsi une connexion électrique lorsque la fiche et la prise sont accouplées mécaniquement grâce à l'effet magnétique. Une telle solution est par exemple décrite dans le brevet EP3469662B1**.** Dans cette solution, la fiche est par exemple agencée dans une unité de stockage assemblée sur le véhicule.

Du côté de la fiche électrique, plusieurs contraintes apparaissent :
- Maintenir l'intégrité de la fiche contre les agressions extérieures, notamment la poussière, les chocs,
- Assurer un fonctionnement constant au cours du temps, quelle que soient les conditions, notamment atmosphériques (pluie, neige, glace),
- Pouvoir connaître l'état de fonctionnement côté fiche.

Les documents EP3680992A1, US2014/176071A1, EP2560245A1 et FR2973592 décrivent des prises électriques à contacts escamotables.

Le but de l'invention est de proposer un dispositif de connexion électrique adapté pour gérer une ou plusieurs des contraintes citées ci-dessus.

### Exposé de l'invention

Ce but est atteint par un dispositif de connexion électrique comprenant une fiche (2) électrique comportant un corps et dotée de blocs de contact électrique logés dans son corps, le corps de la fiche électrique présentant une forme cylindrique dotée de plusieurs ouvertures radiales distinctes, formant chacune un accès à un bloc de contact électrique distinct, une face dite avant et une face dite arrière, le dispositif comportant un boîtier de stockage, la fiche électrique étant apte à prendre une position escamotée dans laquelle elle est logée dans le boîtier de stockage pour empêcher l'accès à ses blocs de contact électrique via lesdites ouvertures radiales et une position déployée dans laquelle elle est au moins partiellement en dehors du boîtier de stockage, le dispositif comportant :
- Des moyens de verrouillage, agencés pour prendre un premier état de verrouillage pour maintenir la fiche électrique à l'intérieur du boîtier de stockage dans sa position escamotée ou un deuxième état de déverrouillage, dans lequel la fiche est libre de se déplacer de sa position escamotée vers sa position déployée,
- Des moyens d'éjection configurés pour éjecter la fiche électrique de sa position escamotée vers sa position déployée lorsque les moyens de verrouillage sont dans l'état de déverrouillage,
- Des moyens de commande desdits moyens de verrouillage, configurés pour actionner lesdits moyens de verrouillage entre leur état de verrouillage et leur état de déverrouillage.

Selon une particularité, les moyens d'éjection comportent des moyens de rappel élastique agencés entre la face arrière de la fiche électrique et le boîtier de stockage, sollicités mécaniquement par la fiche électrique lorsque la fiche électrique est dans sa position escamotée.

Selon une autre particularité, les moyens de rappel élastique comportent au moins une rondelle ressort.

Selon une autre particularité, la fiche comporte une architecture magnétique comprenant une culasse et plusieurs aimants permanents, ladite architecture magnétique étant assemblée sur ledit corps.

Selon une autre particularité, la fiche comporte un capot fixé audit corps et recouvrant l'architecture magnétique, ledit capot formant la face avant de ladite fiche.

Selon une autre particularité, les moyens de verrouillage comportent plusieurs loquets montés en pivotement sur le boîtier de stockage de la fiche, chaque loquet dans son état de verrouillage venant en appui contre la face avant de ladite fiche pour la maintenir dans sa position escamotée contre les moyens de rappel élastique.

Selon une autre particularité, le dispositif comporte un joint d'étanchéité agencé entre la fiche et le boîtier de stockage.

Selon une autre particularité, le dispositif comporte des moyens de détection de la position de la fiche par rapport à un ensemble fixe intégrant une prise électrique.

Selon une autre particularité, les moyens de détection comportent un ou plusieurs capteurs à effet hall.

L'invention concerne également un système de connexion électrique comprenant une prise électrique, le système comportant un dispositif de connexion électrique tel que défini ci-dessus, dans lequel la fiche électrique est apte à venir se connecter sur ladite prise.

### Brève description des figures

D'autres caractéristiques et avantages vont apparaître dans la description détaillée qui suit faite en regard des dessins annexés dans lesquels :
- La figure 1 représente un système de connexion électrique complet incluant une prise électrique et un dispositif de connexion électrique conforme à l'invention, intégrant une fiche électrique à connecter sur la prise électrique ;
- La figure 2 représente le dispositif de connexion électrique conforme à l'invention, vu assemblé, et dans lequel la fiche électrique est en position escamotée dans le boîtier de stockage ;
- Les figures 3A et 3B représentent le dispositif de connexion électrique conforme à l'invention, vu en éclaté, respectivement de côté et en perspective ;
- Les figures 4A et 4B illustrent de manière schématique les deux positions prises par la fiche électrique par rapport à son boîtier de stockage, respectivement en position escamotée dans le boîtier et en position déployée à l'extérieur du boîtier ;
- La figure 5 illustre un exemple de réalisation des deux architectures magnétiques employées dans le système ;

### Description détaillée d'au moins un mode de réalisation

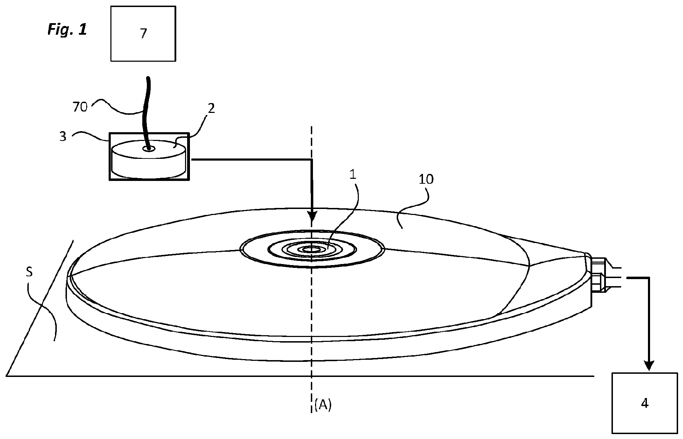

L'invention vise un dispositif de connexion électrique qui est notamment adapté pour être utilisé dans un système de connexion électrique employé pour la recharge d'un véhicule électrique ou hybride rechargeable. Dans un tel système tel que celui représenté sur la figure 1, dédié à la recharge d'un véhicule électrique ou hybride rechargeable, une prise électrique 1 est reliée au réseau électrique 4 et une fiche électrique 2 est reliée à l'ensemble d'alimentation électrique 7 du véhicule.

Le système permet avantageusement de connecter mécaniquement la fiche 2 sur la prise 1 de manière automatique, sans intervention d'un opérateur ou d'un robot, en utilisant uniquement des moyens magnétiques et gravitationnels, répartis d'un côté dans la fiche et de l'autre côté dans la prise.

Pour la suite de la description, on définit une direction de connexion, correspondant à un axe principal (A) selon lequel la fiche 2 est amenée vers la prise 1 pour se connecter sur la prise 1.

Dans la suite de la description les termes "avant" et "arrière" ainsi que "haut" et "bas" et "supérieur" et "inférieur" sont à considérer en tenant compte de la position longitudinale selon l'axe principal (A).

Dans la suite de la description, les termes "intérieur" et "extérieur" sont à considérer selon la position coaxiale par rapport à l'axe principal (A).

Le dispositif de l'invention est par exemple destiné à être employé côté véhicule. Il comporte ainsi la fiche électrique 2 (ci-après désignée la fiche). La fiche 2 est connectée à l'extrémité d'un câble 70 et est mise en mouvement par un mécanisme de manière à venir se connecter à la prise électrique 1.

La prise électrique 1 peut être intégrée dans un ensemble fixe comme décrit dans le brevet EP3469662B1**.** La figure 1 montre un exemple de réalisation du système, dans lequel la prise est intégrée dans un plateau 10, par exemple posé sur le sol S.

De manière non limitative, le mécanisme de mise en mouvement de la fiche 2 peut comporter un enrouleur ou un système à glissière, associé à un moteur électrique, contrôlé pour mettre en mouvement la fiche 2 en direction de la prise électrique 1.

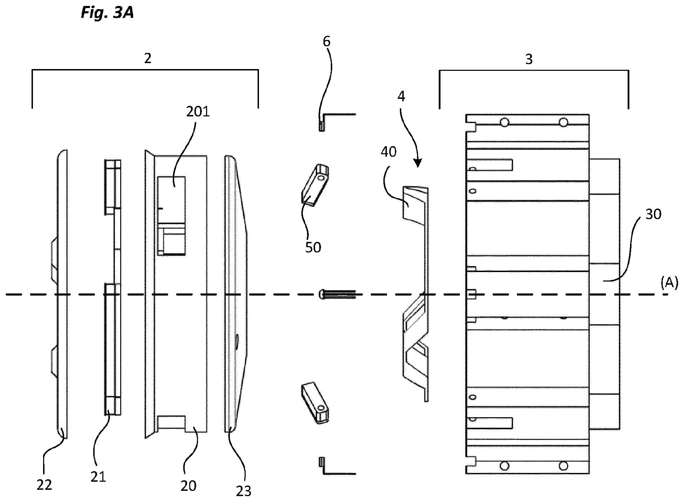

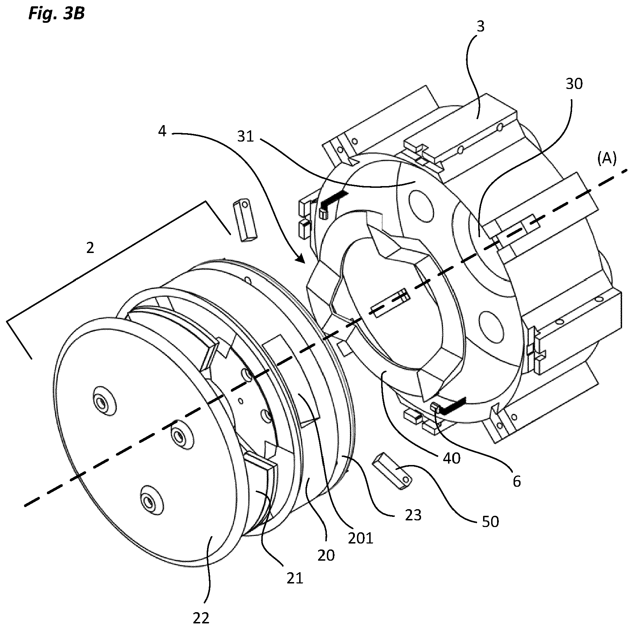

Le dispositif de l'invention comporte également un boîtier 3 de stockage dans lequel peut venir se loger la fiche 2 lorsqu'elle n'est pas utilisée. Ce boîtier 3 est utilisé pour protéger la fiche 2, notamment ses contacts électriques, des agressions extérieures (poussière, eau, projectiles...). Le boîtier 3 se présente par exemple sous la forme d'une cloche développée autour de l'axe principal (A), percée d'une ouverture 30 (figure 3A et figure 3B) à l'arrière pour laisser traverser au moins le câble électrique 70 sur lequel la fiche 2 est raccordée. Le câble est libre de coulisser à travers ladite ouverture 30 lorsque la fiche 2 est mise en mouvement. Le boîtier 3 de stockage en forme de cloche comporte ainsi une paroi latérale et un fond à l'arrière.

Le boîtier 3 de stockage peut être réalisé en métal ou en plastique.

Le volume interne cylindrique du boîtier 3 présente avantageusement un diamètre interne juste supérieur au diamètre externe de la fiche 2, de sorte que la fiche 2 puisse venir s'encastrer sans frottement dans le boîtier 3, laissant un interstice annulaire minimal et ajusté.

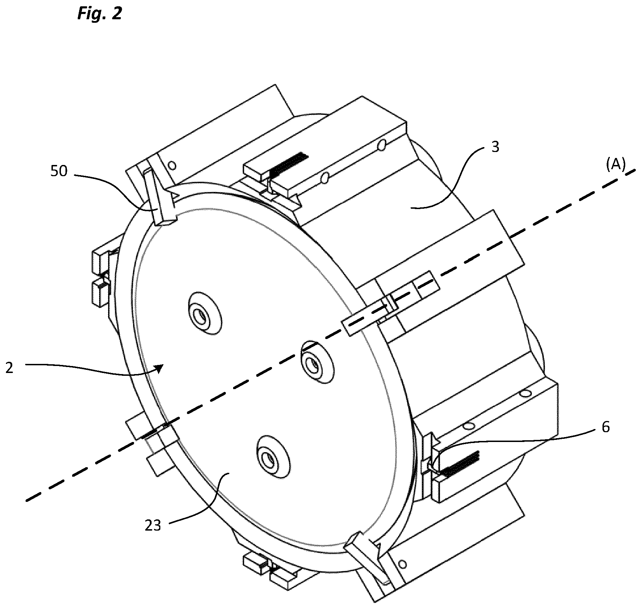

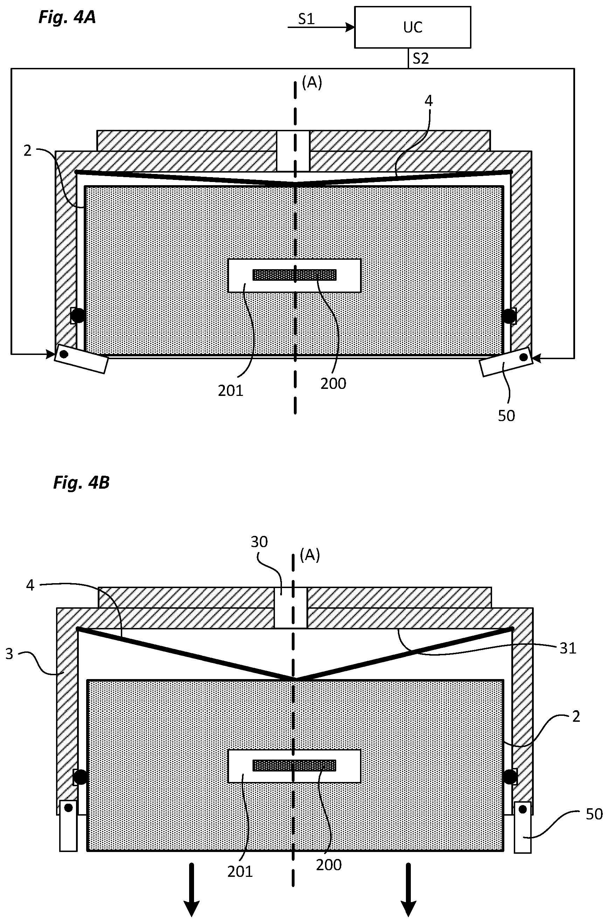

En référence à la figure 2, figure 3A et à la figure 3B, la fiche comporte un corps 20, distinct de celui formant le boîtier 3 de stockage (c'est-à-dire formant deux ensembles structurellement distincts), et plusieurs blocs de contact électrique (200 schématisés figure 4A et figure 4B), intégrés à son corps 20, reliés chacun à un ou plusieurs fils du câble électrique 70.

Ce corps 20 se présente par exemple sous la forme d'une pièce cylindrique développée autour de l'axe principal (A), cette pièce étant par exemple réalisée en matériau plastique.

Le corps de la fiche 2 comporte une face avant par laquelle elle peut venir se coller mécaniquement contre la prise et une face arrière opposée. Cette face avant est dénuée de tous contacts électriques et vient fermer le corps de la fiche du côté de son plan de collage mécanique contre la prise 1.

Le corps 20 comporte en revanche plusieurs ouvertures 201 radiales, réalisées chacune pour donner accès à un bloc de contact électrique 200 distinct présent dans le corps de la fiche. Selon une réalisation particulière, la fiche 2 est ainsi avantageusement configurée pour établir des contacts électriques avec la prise 1 via plusieurs directions radiales.

Un joint 60 d'étanchéité est avantageusement placé entre le corps de la fiche 2 et le boîtier 3 de stockage, protégeant ainsi l'accès aux ouvertures radiales et donc aux blocs de contact électrique 200 de la fiche 2.

La fiche 2 comporte également une architecture magnétique 21, utilisée pour s'accoupler mécaniquement à la prise, dotée d'une architecture magnétique complémentaire.

L'architecture magnétique est fixée à l'avant du corps 20 de la fiche 2. Le dispositif peut comporter un capot 22 avant rapporté sur le corps 20 de la fiche 2 pour recouvrir l'architecture magnétique 21, le capot 22 formant la face avant de la fiche 2, par laquelle elle peut venir se coller mécaniquement contre la face avant de la prise.

La fiche peut également comporter un capot arrière 23 fixée sur l'arrière de son corps 20, ce capot 23 arrière formant la face arrière de la fiche 2.

Lorsque la fiche 2 est collée par effet magnétique sur la prise 1, une connexion électrique est également réalisée entre les blocs de contact électrique de la fiche 2 et des deuxièmes blocs de contact électrique de la prise 1, par les ouvertures 201 radiales présentes sur la fiche 2.

Les deux architectures magnétiques utilisées permettent d'assurer le collage de la fiche 2 sur la prise 1 par effet magnétique. Différentes architectures magnétiques permettant le collage de la fiche 2 sur la prise 1 sont notamment décrites dans le brevet EP3317926B1 et dans la demande de brevet WO2020/229321A1**.** Celles-ci sont applicables à la présente invention mais sont à considérer de manière non limitative.

Les deux architectures magnétiques comportent avantageusement plusieurs aimants permanents. Selon une particularité, les deux architectures magnétiques fonctionnent en attraction lorsque la fiche est dans une position angulaire adaptée par rapport à la prise pour établir la connexion, ou en répulsion lorsque la fiche 2 doit être retirée par rapport à la prise 1 lors de la déconnexion.

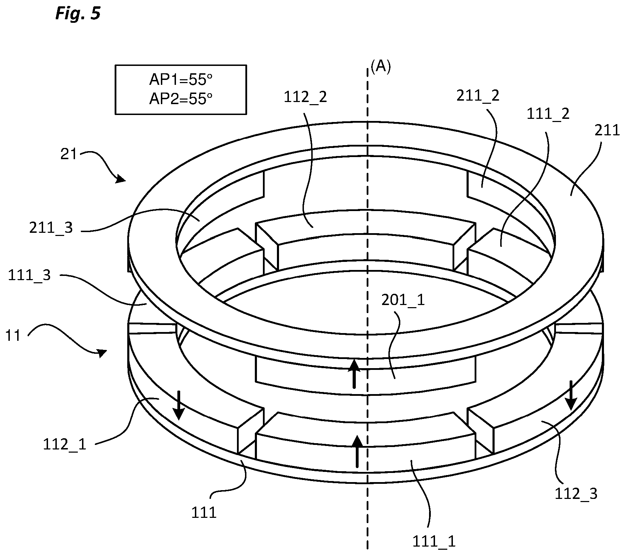

A titre d'exemple, la figure 5 montre une première architecture magnétique 11 présente côté prise 1 et une deuxième architecture magnétique présente côté fiche 2. Les deux architectures magnétiques représentées comportent une culasse ferromagnétique 111, 211 et une ou plusieurs portions d'aimant permanent fixées sur ladite culasse.

Sur la première architecture magnétique 11, trois aimants permanents 111_1, 111_2, 111_3 d'un premier jeu s'étendent chacun sur une plage angulaire AP1 de 55° sur leur portion annulaire et trois aimants permanents 112_1, 112_2, 112_3 d'un deuxième jeu sur une plage angulaire AP2 de 55°.

Chacun des trois nouveaux aimants permanents du deuxième jeu vient s'intercaler entre deux aimants permanents du premier jeu, en laissant un intervalle angulaire régulier non nul avec ces deux aimants du premier jeu. L'intervalle angulaire I1 régulier est voisin de 5° entre deux aimants adjacents.

Les aimants permanents du premier jeu et ceux du deuxième jeu sont orientés magnétiquement suivant l'axe principal (A) et dans des sens opposés.

La deuxième architecture magnétique 21 présente uniquement un premier jeu de trois aimants permanents 211_1, 211_2, 211_3 qui sont identiques aux aimants permanents de la première architecture magnétique.

Il faut noter que les deux architectures magnétiques 11, 21 sont configurées pour assurer un collage de la fiche 2 contre la prise, par effet magnétique d'attraction, selon une orientation donnée, autour de l'axe principale. Les deux architectures magnétiques 11, 21 sont configurées de sorte que la fiche 2 peut prendre plusieurs positions angulaires distinctes lorsqu'elle est collée sur la prise par effet magnétique.

Par exemple, à partir des architectures magnétiques présentées sur la figure 5, la fiche 2 peut prendre trois positions angulaires distinctes, décalées l'une de l'autre de 120°. La fiche peut être dans une première position angulaire, dite à 0°, une deuxième position angulaire dite à -120° et dans une troisième position angulaire dite à +120°.

Bien entendu, les arrangements magnétiques (plages angulaires des aimants et intervalles angulaires entre aimants) de l'architecture magnétique peuvent être ajustés.

Selon un aspect particulier de l'invention, le dispositif comporte également des moyens d'éjection de la fiche 2 hors du boîtier 3 de stockage. Ces moyens d'éjection comportent avantageusement des moyens de rappel élastique 4, agencés entre la face arrière de la fiche 2 et le fond 31 de la cloche formant le boîtier 3. Ces moyens de rappel élastique 4 sont fixés sur le fond de la cloche. Ils sont sollicités en compression par la fiche 2 lorsque celle-ci est logée dans le boîtier 2 de stockage.

Le dispositif comporte également des moyens de verrouillage arrangés pour prendre un état de verrouillage dans lequel ils maintiennent la fiche 2 à l'intérieur du boîtier 2 de stockage, dans une position dite escamotée. Les moyens de verrouillage peuvent passer dans un état de déverrouillage, libérant la fiche 2, qui peut alors prendre une deuxième position dite déployée. La fiche 2 passe de sa position escamotée à sa position déployée sous l'action des moyens de rappel élastique 4.

La figure 4A montre la fiche 2 dans sa position escamotée. Sa face avant est située à l'intérieur du volume formé par les parois du boîtier 3. Elle est maintenue dans cette position grâce aux moyens de verrouillage, configurés dans leur état de verrouillage. Dans cette position, la fiche 2 vient en appui contre les moyens de rappel élastique 4 agencés entre sa face arrière et le fond 31 de la cloche. Dans cette position escamotée, les ouvertures 201 radiales donnant accès aux blocs de contact électrique 200, ne sont pas accessibles, empêchant toute intrusion. Les ouvertures radiales sont ainsi obturées par la paroi latérale du boîtier 3 de stockage.

Un joint d'étanchéité est avantageusement agencé entre le boîtier 3 de stockage et la fiche 2, dans un plan inférieur à celui contenant les ouvertures 201 radiales de la fiche 2, permettant d'assurer l'étanchéité du volume interne du corps de la fiche par rapport à l'extérieur lorsque celle-ci est dans sa position escamotée. Ce joint peut être un joint 60 torique (montré sur les figures 4A et 4B) par exemple placé dans une gorge réalisée sur la face latérale interne du boîtier 3 de stockage ou collé sur cette face interne. Il permet d'assurer l'étanchéité entre la fiche 2 et le boîtier 3 et permet ainsi d'éviter l'emploi d'un couvercle ou opercule pour venir enfermer la fiche 2 dans le boîtier 3 de stockage. Il protège ainsi l'accès aux blocs de contact électrique 200 présents dans le corps de la fiche 2 lorsque la fiche 2 est dans sa position escamotée. D'autres solutions d'étanchéité pourraient être envisagées.

La figure 4B montre la fiche dans sa position déployée. Les moyens de verrouillage sont dans leur état de déverrouillage, libérant le mouvement de la fiche 2, entraînée en translation vers l'extérieur de la cloche grâce aux moyens de rappel élastique 4. La fiche 2 est ainsi éjectée par les moyens de rappel élastique 4 pour sortir du volume interne de la cloche. Il faut noter que l'éjection de la fiche 2 est réalisée préalablement à la connexion à la prise. Autrement dit, lorsque la fiche 2 est dans la position déployée, hors du boîtier de stockage, elle n'est pas connectée sur la prise 1. Ce principe d'éjection n'a pas pour but de finaliser la connexion entre la fiche 2 et la prise 1. Il permet juste de libérer la fiche de la position dans laquelle l'accès à ses blocs de contact est protégé par le boîtier de stockage. Le câble peut disposer d'un peu de mou pour permettre à la fiche d'être éjectée du boîtier. La fin de la connexion est réalisée en déroulant le câble.

De manière non limitative, les moyens de rappel élastique peuvent être formés de plusieurs ressorts hélicoïdaux et/ou de manière avantageuse d'une rondelle 40 ressort (comme représentée sur les figures annexées), par exemple d'une rondelle Belleville. Bien entendu, d'autres solutions pourraient être envisagées.

De manière non limitative, les moyens de verrouillage peuvent comporter plusieurs loquets 50 montés en pivotement sur les parois de la cloche, chaque loquet 50 pouvant prendre une position relevée dans laquelle il est dans l'état de déverrouillage (figure 4B) et une position rabattue contre la face avant de la fiche 2, dans laquelle il est dans l'état de verrouillage (figure 4A). L'actionnement des moyens de verrouillage peut être par exemple réalisé de manière électromagnétique ou de manière électrique.

Le dispositif comporte des moyens de commande, configurés pour commander l'actionnement desdits moyens de verrouillage entre leur état de verrouillage et leur état de déverrouillage ou inversement. Ces moyens de commande peuvent comporter une unité de traitement et de commande UC (figure 4A) chargée d'exécuter une séquence de fonctionnement.

De manière avantageuse, le dispositif peut comporter des moyens de détection chargés de suivre la position de la fiche 2 par rapport à l'ensemble fixe qui porte la prise 1, vers lequel la fiche 2 est approchée pour établir la connexion.

Ces moyens de détection peuvent comporter un ou plusieurs capteurs 6. De manière non limitative, il peut s'agir de capteurs à effet hall agencés et répartis de manière régulière sur le pourtour de la cloche, au niveau de son rebord avant.

Bien entendu, d'autres types de capteurs 6 pourraient être employés, par exemple interrupteur de type "reed" ou de type MEMS...

A titre d'exemple, la séquence de fonctionnement pourrait être la suivante :
**Figure 4A** :
   - L'unité de traitement et de commande UC reçoit un signal S1 de demande de connexion de la fiche 2 à la prise 1 ;
   - L'unité de traitement et de commande UC peut vérifier que la fiche 2 est bien dans sa position escamotée à l'intérieur du boîtier 3 ;
   - L'unité de traitement et de commande UC envoie un signal de commande S2 aux moyens de verrouillage pour les commander vers leur état de déverrouillage ;
   - Le verrouillage de la fiche 2 en position dans le boîtier 3 permet de relâcher la tension mécanique sur le câble 70, un mou étant conservé pour permettre le passage de la fiche 2 de sa position escamotée vers sa position déployée ;
**Figure 4B** :
   - Les moyens de verrouillage sont actionnés vers leur état de déverrouillage, libérant la fiche 2 ; La libération de la fiche 2 est permise grâce au mou suffisant laissé par le câble 70 au bout duquel la fiche 2 est positionnée ;
   - Sollicitée par les moyens de rappel élastique 4, la fiche 2 est éjectée vers sa position déployée ;
   - L'unité de traitement et de commande UC peut commander les moyens de mise en mouvement de la fiche 2, par exemple l'enrouleur, pour dérouler le câble et amener la fiche 2 à proximité de la prise pour la connexion ;
La séquence inverse est mise en œuvre après la déconnexion de la fiche 2 :
   - Réception par l'unité de traitement et de commande UC d'un signal indiquant la déconnexion de la fiche 2 par rapport à la prise 1 ;
   - L'unité de traitement et de commande UC contrôle les moyens de mise en mouvement de la fiche 2 pour tirer sur le câble et la ramener vers l'intérieur du boîtier 3 de stockage ;
   - L'unité de traitement et de commande UC reçoit des données en provenance des moyens de détection 6 et détermine que la fiche 2 est au moins partiellement logée dans le boîtier 3 de stockage ;
   - L'unité de traitement et de commande UC envoie un signal aux moyens de verrouillage pour les faire passer dans leur état de verrouillage, bloquant la fiche 2 dans sa position escamotée. En se refermant, les loquets 50 viennent appuyer contre la face avant de la fiche et ainsi comprimer les moyens de rappel élastique 4 ;
Le dispositif de l'invention présente de nombreux avantages, parmi lesquels :
   - Une solution pour éjecter la fiche hors de son boîtier, permettant d'éliminer notamment tous les débris, le gel, la boue, susceptible de venir empêcher son extraction du boîtier ;
   - Une protection de la fiche et de ses blocs de contact contre les agressions extérieures, grâce au boîtier de stockage ; La solution permet notamment de s'affranchir de l'utilisation d'un capot ou opercule sur le boîtier de stockage ;
   - Une solution simple de fabrication et d'assemblage, offrant les avantages précités ;

## Revendications

1. Dispositif de connexion électrique comprenant une fiche (2) électrique comportant un corps et dotée de blocs de contact électrique (200) logés dans son corps, le corps de la fiche (2) électrique présentant une forme cylindrique dotée de plusieurs ouvertures radiales distinctes, formant chacune un accès à un bloc de contact électrique (200) distinct, une face dite avant et une face dite arrière, le dispositif comportant un boîtier (3) de stockage, la fiche (2) électrique étant apte à prendre une position escamotée dans laquelle elle est logée dans le boîtier (3) de stockage pour empêcher l'accès à ses blocs de contact électrique via lesdites ouvertures radiales et une position déployée dans laquelle elle est au moins partiellement en dehors du boîtier (3) de stockage, le dispositif étant **caractérisé en ce qu'**il comporte :
- Des moyens de verrouillage, agencés pour prendre un premier état de verrouillage pour maintenir la fiche (2) électrique à l'intérieur du boîtier (3) de stockage dans sa position escamotée ou un deuxième état de déverrouillage, dans lequel la fiche (2) est libre de se déplacer de sa position escamotée vers sa position déployée,
- Des moyens d'éjection configurés pour éjecter la fiche (2) électrique de sa position escamotée vers sa position déployée lorsque les moyens de verrouillage sont dans l'état de déverrouillage,
- Des moyens de commande desdits moyens de verrouillage, configurés pour actionner lesdits moyens de verrouillage entre leur état de verrouillage et leur état de déverrouillage.

2. Dispositif selon la revendication 1, **caractérisé en ce que** les moyens d'éjection comportent des moyens de rappel élastique (4) agencés entre la face arrière de la fiche (2) électrique et le boîtier (3) de stockage, sollicités mécaniquement par la fiche (2) électrique lorsque la fiche (2) électrique est dans sa position escamotée.

3. Dispositif selon la revendication 2, **caractérisé en ce que** les moyens de rappel élastique (4) comportent au moins une rondelle (40) ressort.

4. Dispositif selon l'une des revendications 1 à 3, **caractérisé en ce que** la fiche comporte une architecture magnétique (21) comprenant une culasse et plusieurs aimants permanents, ladite architecture magnétique (21) étant assemblée sur ledit corps (20).

5. Dispositif selon la revendication 4, **caractérisé en ce que** la fiche (2) comporte un capot (22) fixé audit corps (20) et recouvrant l'architecture magnétique (21), ledit capot (22) formant la face avant de ladite fiche (2).

6. Dispositif selon l'une des revendications 1 à 5, **caractérisé en ce que** les moyens de verrouillage comportent plusieurs loquets (50) montés en pivotement sur le boîtier (3) de stockage de la fiche, chaque loquet dans son état de verrouillage venant en appui contre la face avant de ladite fiche pour la maintenir dans sa position escamotée contre les moyens de rappel élastique (4).

7. Dispositif selon l'une des revendications 1 à 6, **caractérisé en ce qu'**il comporte un joint (60) d'étanchéité agencé entre la fiche (2) et le boîtier (3) de stockage.

8. Dispositif selon l'une des revendications 1 à 7, **caractérisé en ce qu'**il comporte des moyens de détection de la position de la fiche (2) par rapport à un ensemble fixe intégrant une prise (1) électrique.

9. Dispositif selon la revendication 8, **caractérisé en ce que** les moyens de détection comportent un ou plusieurs capteurs (6) à effet hall.

10. Système de connexion électrique comprenant une prise électrique, **caractérisé en ce qu'**il comporte un dispositif de connexion électrique tel que défini dans l'une des revendications 1 à 9, dans lequel la fiche électrique (2) est apte à venir se connecter sur ladite prise.

## Patentansprüche

1. Elektrische Verbindungsvorrichtung, bestehend aus einem elektrischen Stecker (2) mit einem Gehäuse, der mit elektrischen Kontaktblöcken (200) ausgestattet ist, die in seinem Gehäuse untergebracht sind, wobei das Gehäuse des elektrischen Steckers (2) eine zylindrische Form mit mehreren voneinander getrennten radialen Öffnungen aufweist, von denen jede einen Zugang zu einem separaten elektrischen Kontaktblock (200) bildet, sowie einer sogenannten Vorderseite und einer sogenannten Rückseite, wobei die Vorrichtung ein Aufbewahrungsgehäuse (3) aufweist, wobei der elektrische Stecker (2) in der Lage ist, eine versenkte Position einzunehmen, in der er im Aufbewahrungsgehäuse (3) untergebracht ist, um den Zugang zu seinen elektrischen Kontaktblöcken über die genannten radialen Öffnungen zu verhindern, sowie eine ausgefahrene Position, in der er sich zumindest teilweise außerhalb des Aufbewahrungsgehäuses (3) befindet, wobei die Vorrichtung **dadurch gekennzeichnet ist, dass** sie Folgendes aufweist:
- Verriegelungsmittel, die so angeordnet sind, dass sie entweder einen ersten Verriegelungszustand einnehmen, um den elektrischen Stecker (2) im Inneren des Aufbewahrungsgehäuses (3) in seiner versenkten Position zu halten, oder einen zweiten Entriegelungszustand, in dem sich der Stecker (2) frei von seiner versenkten Position in seine ausgefahrene Position bewegen kann,
- Auswurfmittel, die so ausgelegt sind, dass sie den elektrischen Stecker (2) aus seiner versenkten Position in seine ausgefahrene Position auswerfen, wenn sich die Verriegelungsmittel im Entriegelungszustand befinden,
- Steuermittel für die Verriegelungsmittel, die so ausgelegt sind, dass sie die Verriegelungsmittel zwischen ihrem Verriegelungszustand und ihrem Entriegelungszustand betätigen.

2. Vorrichtung nach Anspruch 1, **dadurch gekennzeichnet, dass** die Auswurfmittel elastische Rückstellmittel (4) aufweisen, die zwischen der Rückseite des elektrischen Steckers (2) und dem Aufbewahrungsgehäuse (3) angeordnet sind und vom elektrischen Stecker (2) mechanisch beaufschlagt werden, wenn sich der elektrische Stecker (2) in seiner versenkten Position befindet.

3. Vorrichtung nach Anspruch 2, **dadurch gekennzeichnet, dass** die elastischen Rückstellmittel (4) mindestens eine Federscheibe (40) aufweisen.

4. Vorrichtung nach einem der Ansprüche 1 bis 3, **dadurch gekennzeichnet, dass** der Stecker eine Magnetkonstruktion (21) enthält, die ein Joch und mehrere Permanentmagnete aufweist, wobei die Magnetkonstruktion (21) an dem Gehäuse (20) angebracht ist.

5. Vorrichtung nach Anspruch 4, **dadurch gekennzeichnet, dass** der Stecker (2) eine am Gehäuse (20) befestigte Abdeckung (22) aufweist, die die magnetische Anordnung (21) abdeckt, wobei die Abdeckung (22) die Vorderseite des Steckers (2) bildet.

6. Vorrichtung nach einem der Ansprüche 1 bis 5, **dadurch gekennzeichnet, dass** die Verriegelungsmittel mehrere Riegel (50) aufweisen, die schwenkbar am Aufbewahrungsgehäuse (3) für den Stecker angebracht sind, wobei jede Verriegelungsklinke in ihrem Verriegelungszustand an der Vorderseite des Steckers anliegt, um diesen entgegen der Wirkung der elastischen Rückstellmittel (4) in seiner versenkten Position zu halten.

7. Vorrichtung nach einem der Ansprüche 1 bis 6, **dadurch gekennzeichnet, dass** sie eine zwischen dem Stecker (2) und dem Aufbewahrungsgehäuse (3) angeordnete Dichtung (60) aufweist.

8. Vorrichtung nach einem der Ansprüche 1 bis 7, **dadurch gekennzeichnet, dass** sie Mittel zur Erfassung der Position des Steckers (2) relativ zu einer feststehenden Baugruppe aufweist, die eine elektrische Steckdose (1) enthält.

9. Vorrichtung nach Anspruch 8, **dadurch gekennzeichnet, dass** die Mittel zur Erfassung einen oder mehrere Hall-Sensoren (6) aufweisen.

10. Elektrisches Verbindungssystem mit einer Steckdose, **dadurch gekennzeichnet, dass** es eine elektrische Verbindungsvorrichtung gemäß einem der Ansprüche 1 bis 9 aufweist, wobei der Stecker (2) so ausgelegt ist, dass er mit der Steckdose verbunden werden kann.

## Claims

1. Electrical connection device comprising an electrical plug (2) comprising a body and provided with electrical contact blocks (200) housed in its body, the body of the electrical plug (2) having a cylindrical form provided with several distinct radial apertures, each forming an access to a distinct electrical contact block (200), a so-called front face and a so-called rear face, the device comprising a storage casing (3), the electrical plug (2) being able to assume a retracted position in which it is housed in the storage casing (3) to prevent the access to its electrical contact blocks via said radial apertures and a deployed position in which it is at least partially outside the storage casing (3), the device being **characterized in that** it comprises:
- Locking means, arranged to assume a first, locking state to keep the electrical plug (2) inside the storage casing (3) in its retracted position, or a second, unlocking state, in which the plug (2) is free to be moved from its retracted position to its deployed position,
- Ejection means configured to eject the electrical plug (2) from its retracted position to its deployed position when the locking means are in the unlocking state,
- Means for controlling said locking means, configured to actuate said locking means between their locking state and their unlocking state.

2. Device according to Claim 1, **characterized in that** the ejection means comprise elastic return means (4) arranged between the rear face of the electrical plug (2) and the storage casing (3), stressed mechanically by the electrical plug (2) when the electrical plug (2) is in its retracted position.

3. Device according to Claim 2, **characterized in that** the elastic return means (4) comprise at least one spring washer (40).

4. Device according to one of Claims 1 to 3, **characterized in that** the plug comprises a magnetic architecture (21) comprising a yoke and several permanent magnets, said magnetic architecture (21) being assembled on said body (20).

5. Device according to Claim 4, **characterized in that** the plug (2) comprises a cover (22) fixed to said body (20) and covering the magnetic architecture (21), said cover (22) forming the front face of said plug (2).

6. Device according to one of Claims 1 to 5, **characterized in that** the locking means comprise several latches (50) mounted to pivot on the storage casing (3) of the plug, each latch in its locking state coming to bear against the front face of said plug to keep it in its retracted position against the elastic return means (4).

7. Device according to one of Claims 1 to 6, **characterized in that** it comprises a seal (60) arranged between the plug (2) and the storage casing (3).

8. Device according to one of Claims 1 to 7, **characterized in that** it comprises means for detecting the position of the plug (2) with respect to a fixed assembly incorporating an electrical socket (1).

9. Device according to Claim 8, **characterized in that** the detection means comprise one or more Hall effect sensors (6).

10. Electrical connection system comprising an electrical socket, **characterized in that** it comprises an electrical connection device as defined in one of Claims 1 to 9, wherein the electrical plug (2) is able to be connected to said socket.
